# EUROPÄISCHE PATENTSCHRIFT

(11) **EP 3 983 858 B1**
(45) Veröffentlichungstag und Bekanntmachung des Hinweises auf die Patenterteilung: **21.02.2024**
(21) Anmeldenummer: 20732191.0
(22) Anmeldetag: 09.06.2020
(51) Int. Cl.: G05B 19/418, G06F 21/57, H04L 67/1097, H04L 67/12

(54) **VERFAHREN ZUM BEREITSTELLEN EINES DIGITALEN ZWILLINGS FÜR EIN NICHT DIGITALES FELDGERÄT DER AUTOMATISIERUNGSTECHNIK**
METHOD FOR PROVIDING A DIGITAL TWIN FOR A NONDIGITAL AUTOMATION ENGINEERING FIELD DEVICE
PROCÉDÉ DE MISE À DISPOSITION D'UN JUMEAU NUMÉRIQUE DESTINÉ À UN APPAREIL DE TERRAIN NON NUMÉRIQUE D'AUTOMATISATION

(30) Priorität: 13.06.2019 DE 102019116120
(43) Veröffentlichungstag der Anmeldung: 20.04.2022
(73) Patentinhaber: Endress+Hauser Process Solutions AG, 4153 Reinach (CH)
(72) Erfinder: ENS, Daniel, 79540 Lörrach (DE); BUCHDUNGER, Andreas, 79395 Neuenburg (DE); DE STASIO, Enrico Mario, 1044 Fey (CH)
(74) Vertreter: Koslowski, Christine Adelheid
(86) Internationale Anmeldenummer: PCT/EP2020/065988
(87) Internationale Veröffentlichungsnummer: WO 2020/249569

(56) Entgegenhaltungen:
- EP-A2- 3 318 944
- DE-A1-102013 111 052
- DE-A1-102016 205 321

## Beschreibung

Die Erfindung bezieht sich auf ein Verfahren zum Bereitstellen eines digitalen Zwillings für ein nicht digitales Feldgerät der Automatisierungstechnik.

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, Leitfähigkeitsmessgeräte, usw., welche die entsprechenden Prozessvariablen Füllstand, Durchfluss, Druck, Temperatur bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress + Hauser hergestellt und vertrieben.

Gegenwärtig sind in einer Vielzahl der bestehenden Automatisierungsanlagen noch Feldgeräte, die über eine Zweidrahtleitung zu einer übergeordneten Einheit, bspw. eine Steuereinheit SPS, verbunden sind, gängig. Gemeinhin werden die bereits in der Automatisierungsanlage befindlichen Feldgeräte auch als installierte Basis bezeichnet. Die Feldgeräte sind dabei derartig ausgebildet, dass die Mess- bzw. Stellwerte als Haupt-Prozessvariable über die Zweidrahtleitung bzw. das Zweileiterkabel analog in Form eines 4-20 mA Signals kommuniziert, d.h. übertragen, werden, weswegen sie auch als Zweileiterfeldgeräte bezeichnet werden. Zur Übertragung aller anderen Daten hat sich insbesondere das HART Protokoll bewährt, bei welchem dem analogen Stromsignal von 4-20 mA ein Frequenzsignal als digitales Zweileitersignal zur Datenübertragung überlagert wird. Gemäß dem HART Protokoll wird zwischen 1200 Hz und 2400 Hz zur Datenübertragung umgeschaltet, wobei die niedrigere Frequenz für eine logische "0" und die höhere Frequenz für eine logische "1" steht. Auf diese Weise bleibt das sich nur langsam veränderliche analoge Stromsignal von der Frequenzüberlagerung unberührt, sodass mittels HART analoge und digitale Kommunikation vereint wird.

Aufgrund der Beschränkung der Kommunikation von solchen Zweileiterfeldgeräten über die Zweidrahtleitung ist die Anbindung der Feldgeräte an eine digitale Plattform, bspw. ein MES-System (Manufacturing Execution System), ein ERP-System (Enterprise-Resource-Planning) oder eine Cloud Plattform, nicht ohne weiteres möglich. Die Zweileiterfeldgeräte fungieren in der Automatisierungsanlage quasi autark, d.h. sie haben keinen Kontakt zu der IT-Welt außerhalb der Automatisierungsanlage, d.h. sie sind nicht digitalfähig.

Aus dem Stand der Technik sind die DE 10 2013 111052 A1, die DE 10 2016 205321 A1 und die EP 3 318 944 A2 bekannt geworden. Die DE 10 2013 111052 A1 offenbart ein System zum flexiblen Betreiben einer Automatisierungsanlage mit zumindest einem Rechner und einer Vielzahl von Feldgeräten zur Bestimmung und/oder Überwachung von physikalischen oder chemischen Prozessgrößen. Die DE 10 2016 205321 A1 offenbart ein Verfahren zum Reduzieren einer Angriffsmöglichkeit auf eine Schwachstelle eines Gerätes über eine Netzwerkzugangsstelle zu einem Netzwerk. Die EP 3 318 944 A2 offenbart ein industrielles Visualisierungssystem, um Virtual-Reality- und Augmented-Reality-Darstellungen von Industrieanlagen an tragbare Geräte zu liefern, um die Fern- oder erweiterte Interaktion mit Automatisierungssystemen innerhalb der Anlage zu erleichtern.

Der Erfindung liegt somit die Aufgabe zugrunde, eine Möglichkeit aufzuzeigen, wie Zweileiterfeldgeräte die noch über die herkömmliche Zweidrahtleitung Daten kommunizieren und die keine Anbindung an die IT-Welt außerhalb der Automatisierungsanlage haben, digitalfähig werden können.

Die Aufgabe wird erfindungsgemäß gelöst durch das Verfahren gemäß Patentanspruch 1.

Das erfindungsgemäße Verfahren zum Bereitstellen eines digitalen Zwillings für ein nicht digitales Feldgerät der Automatisierungstechnik, umfasst die folgenden Verfahrensschritte:
a) Verbinden einer Verbindungseinheit mit dem nicht digitalen Feldgerät;
b) Herunterladen von in dem nicht digitalen Feldgerät vorgehalten Daten zu der Verbindungseinheit;
c) Erzeugen eines Zeitstempels für die heruntergeladenen Daten;
d) Übermitteln der heruntergeladenen Daten zusammen mit dem Zeitstempel an eine Cloud;
e) Instanziieren eines digitalen Abbilds des nicht digitalen Feldgerätes in der Cloud, wobei die übermittelten Daten und weitere für das nicht digitale Feldgerät spezifische Daten, die in der Cloud vorgehalten werden, dem digitalen Abbild zugeführt werden, so dass das digitale Abbild sämtliche für das nicht digitale Feldgerät zu einem Zeitpunkt des Zeitstempels bereitstehende Daten umfasst, wobei das digitale Abbild ferner mit dem Zeitstempel versehen wird;
f) Erzeugen und Bereitstellen eines authentifizierten Links zum Herunterladen des digitalen Zwillings für das nicht digitale Feldgerät aus der Cloud, wobei der digitale Zwilling zumindest eine Verwaltungsschale und das digitale Abbild mit dem Zeitstempel umfasst;
g) Herunterladen des digitalen Zwillings mit Hilfe des Links und Ausführen des digitalen Zwillings auf einer Computereinheit, welche vorzugsweise von einem Betreiber des nicht digitalen Feldgeräts betrieben wird;
h) Anbinden des auf der Computereinheit ausgeführten digitalen Zwillings an eine in der Cloud befindliche Produktdatenbank, welche Produktdatenbank Produktdaten umfasst, die zumindest alle für das nicht digitale Feldgerät relevanten Stammdaten, insbesondere auch eine Seriennummer, alle relevanten einen Lebenszyklus des nicht digitalen Feldgerätes betreffenden Daten und/oder die Verwaltungsschale aufweist;
i) Überprüfen, vorzugsweise in regelmäßigen Abständen, ob die in der Produktdatenbank vorgehaltenen Produktdaten eine Änderung gegenüber den Daten, die das digitale Abbild zum Zeitpunkt des Zeitstempels zugeführt wurden, erfahren haben.

Es wird also vorgeschlagen, dass jedes nicht digitale Feldgerät bzw. ein Feldgerät der sogenannten installierten Basis einen digitalen Zwilling erhält. Oder anders ausgedrückt, das nicht digitale Feldgerät erhält einen digitalen Repräsentanten, dem eine IP-Adresse zugeordnet ist, so dass der digitale Zwilling als sogenannte Industrie-4.0-Komponente verwendbar ist. Beispielsweise ist der digitale Zwilling Komponente einer digitalen Prozessanlage. Der digitale Zwilling erhält zum Zeitpunkt der Erstellung alle in dem nicht digitalen Feldgerät vorhandenen Daten und weitere für das nicht digitale Feldgerät spezifische Daten, die in der Cloud, bspw. durch den Feldgerätehersteller bereitgestellt bzw. vorgehalten werden. Die Daten werden zusammen mit einem Zeitstempel, der den Zeitpunkt der Erstellung des digitalen Zwillings festhält, mit einer Verwaltungsschale gekapselt, wobei die Verwaltungsschale alle für das nicht digitale Feldgerät relevanten Eigenschaften und Funktionalitäten abbildet. Durch die Verwaltungsschale bekommt der digitale Zwilling auch automatisch eine IP- Adresse, wodurch eine einfache, IP-basierte Kommunikation im Sinne von Industrie 4.0 ermöglicht wird. Konkret kann also jeder angeschlossene digitale Zwilling eineindeutig identifiziert und über ein Netzwerk erreicht werden - unabhängig vom Alter des nicht digitalen Feldgerätes in der Anlage. Auf diese Weise können nicht digitale Feldgeräte schnell und unkompliziert an MES- oder ERP-Systeme oder eine PLC angebunden werden.

Ein Vorteil des erfindungsgemäßen Verfahrens besteht darin, dass der digitale Zwilling neben den Daten seines physischen Zwillings z.B. auch alle verfügbaren und im Laufe seines Lebenszyklus' entstandenen Konfigurations- und Servicedaten enthält. Hierdurch ist es möglich, auch die große Anzahl von installierten, lediglich analog kommunizierenden Feldgeräten mit digitalen Zwillingen zu versehen.

Eine vorteilhafte Ausführungsform des erfindungsgemäßen Verfahrens sieht ferner vor, dass überprüft wird, ob eine Änderung der Verwaltungsschale gegenüber der Verwaltungsschale des digitalen Abbilds gegeben hat.

Eine vorteilhafte Ausführungsform des erfindungsgemäßen Verfahrens sieht vor, dass in dem Fall, dass eine Änderung der in der Produktdatenbank vorgehaltenen Daten im Vergleich zu den in dem digitalen Abbild vorgehaltenen Daten und/oder eine Änderung der Verwaltungsschale gegeben hat, ein Triggersignal von dem digitalen Zwilling ausgegeben wird. Insbesondere kann die Ausführungsform vorsehen, dass das Triggersignal von dem digitalen Zwilling an ein Instandhaltungsplanungs- und -steuerungssystem des Betreibers des nicht digitalen Feldgeräts ausgegeben wird, so dass der Betreiber des nicht digitalen Feldgerätes über die Änderung informiert wird.

Eine weitere vorteilhafte Ausführungsform des erfindungsgemäßen Verfahrens sieht vor, dass als Daten eine Seriennummer, einen oder mehrere Parameter und/oder einen oder mehrere Messwerte von dem nicht digitalen Feldgerät heruntergeladen werden.

Eine weitere vorteilhafte Ausführungsform des erfindungsgemäßen Verfahrens sieht vor, dass die Verbindungseinheit über eine drahtlose Verbindung mit dem nicht digitalen Feldgerät verbunden wird.

Eine alternative Ausführungsform des erfindungsgemäßen Verfahrens sieht vor, dass die Verbindungseinheit mittels einer Verbindungsleitung mit dem nicht digitalen Feldgerät verbunden wird.

Eine weitere vorteilhafte Ausführungsform des erfindungsgemäßen Verfahrens sieht vor, dass die Verbindungseinheit als eine stationäre Einheit ausgebildet ist, die dauerhaft mit dem nicht digitalen Feldgerät verbunden ist und wobei in dem Fall, dass eine Änderung festgestellt wird, die Verfahrensschritte c) bis i) erneut ausgeführt werden.

Eine weitere vorteilhafte Ausführungsform des erfindungsgemäßen Verfahrens sieht vor, dass die Verbindungseinheit als eine mobile Einheit ausgebildet ist, die nach dem Herunterladen der Daten gemäß Verfahrensschritt b) von dem nicht digitalen Feldgerät getrennt wird und wobei in dem Fall, dass eine Änderung festgestellt wird, die Verfahrensschritte a) bis i) erneut ausgeführt werden.

Die Erfindung wird anhand der nachfolgenden Zeichnung näher erläutert. Es zeigt:

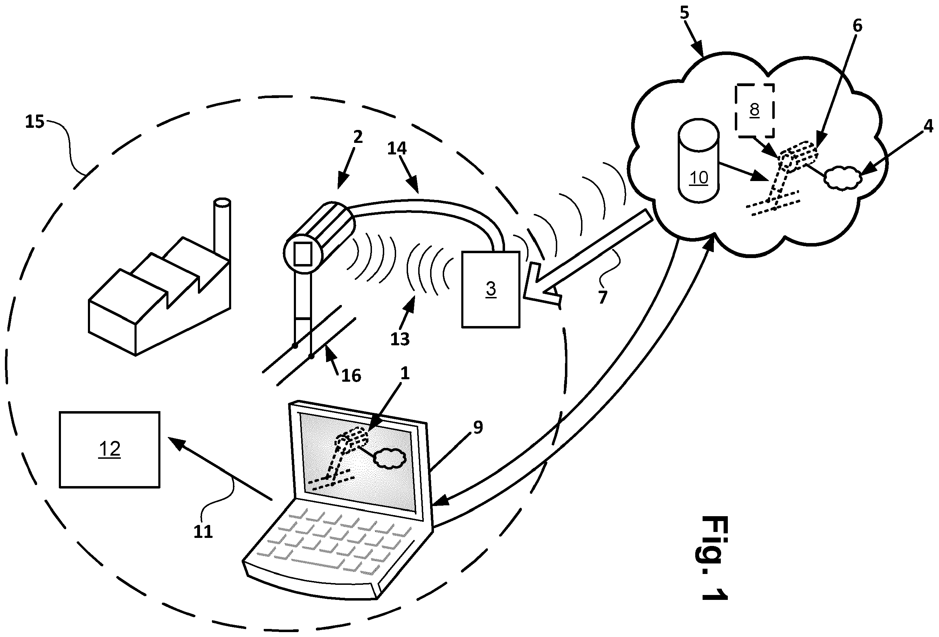

Fig. 1: eine schematische Darstellung einer Automatisierungsanlage zusammen mit einer außerhalb der Anlage befindlichen Cloud zur Verdeutlichung des erfindungsgemäßen Verfahrens.

Figur 1 zeigt eine schematische Darstellung einer Automatisierungsanlage 15 zusammen mit einer außerhalb der Anlage 15 befindlichen Cloud 5. Die Automatisierungsanlage 15 wird von einem Anlagenbetreiber betrieben und umfasst eine Vielzahl von Zweileiterfeldgeräten, die über eine Zweidrahtleitung 16 mit einer übergeordneten Einheit verbunden sind. Über die Zweidrahtleitung werden die Mess- bzw. Stellwerte zum Ausführen an eine in Fig. 1 nicht gesondert dargestellte übergeordnete Einheit übertragen, so dass ein Prozess ausgeführt/gesteuert werden kann. Zur Wartung und Instandhaltung der Automatisierungsanlage kann ein Instandhaltungsplanungs- und -steuerungssystem (CMMS) 12 seitens des Anlagenbetreibers betrieben werden.

Das erfindungsgemäße Verfahren zum Bereitstellen eines digitalen Zwillings 1 für ein nicht digitales Feldgerät der Automatisierungstechnik bzw. ein Zweileiterfeldgerät 2, wie es in der Automatisierungsanlage 15 des Anlagenbetreibers vielfach eingesetzt wird, sieht die folgenden Verfahrensschritte vor:
In einem ersten Verfahrensschritt a) wird eine Verbindungseinheit 3 mit dem nicht digitalen Feldgerät 2 in der Automatisierungsanlage 15 verbunden. Die Verbindung kann dabei sowohl über eine Leitung 14 als auch drahtlos erfolgen, falls das Zweileiterfeldgerät bereits über eine entsprechende Funkeinheit zur drahtlosen, insbesondere drahtlosen Nahfeld 13 Datenübertragung verfügt. Als Verbindungseinheit können sowohl mobile Einheiten, wie beispielsweise Smartphones oder auch spezielle in der Prozessautomatisierung übliche tragbare Verbindungseinheiten oder auch stationäre Einheiten, die vorzugsweise dauerhaft mit dem Zweileiterfeldgerät 2 verbunden sind, eingesetzt werden.

In einem nächsten Verfahrensschritt b) werden die Daten, die in dem nicht digitalen Feldgerät 2 vorgehalten sind bzw. werden, von der Verbindungseinheit 3 heruntergeladen. Derartige Daten können beispielsweise eine Seriennummer, einen oder mehrere Parameter und/oder einen oder mehrere Mess- bzw. Stellwerte umfassen.

In einem daran anschließenden Verfahrensschritt c) ist die Erzeugung eines Zeitstempels 4 für die von dem Zweileiterfeldgerät 2 heruntergeladenen Daten vorgesehen. Die Erzeugung des Zeitstempels erfolgt vorzugsweise in der Verbindungseinheit 3. Anschließend werden die heruntergeladenen Daten in einem Verfahrensschritt d) zusammen mit dem erzeugten Zeitstempel 4 an eine Cloud 5 übertragen.

In der Cloud 5 wird in einem nächsten Verfahrensschritt e) ein digitales Abbild 6 des Zweileiterfeldgerätes 2 instanziiert. Das digitale Abbild 6 umfasst hierbei die übermittelten Daten und weitere für das Zweileiterfeldgerät 2 spezifische Daten, die in der Cloud 5 in einer Produktdatenbank 10 vorgehalten werden, so dass das digitale Abbild 6 sämtliche bzw. alle zu dem Zeitpunkt der Erzeugung des Zeitstempels 4 zur Verfügung stehenden Daten aufweist. Zusätzlich wird das digitale Abbild mit dem Zeitstempel versehen. Die Produktdatenbank 10 kann hierbei bspw. durch den Feldgerätehersteller gehostet werden. Das digitale Abbild 6, welcher "nur" die Daten umfasst wird ferner in eine Verwaltungsschale gekapselt, so dass der digitale Zwilling 1 als digitaler Repräsentant des Zweileiterfeldgerätes generiert wird. Dem digitalen Zwilling 1 ist ferner eine IP-Adresse zugeordnet, so dass der digitale Zwilling 1 als Industrie-4.0-Komponente verwendbar ist.

In einem nächsten Verfahrensschritt f) wird ein authentifizierter Link 7 zum Herunterladen des digitalen Zwillings erzeugt und durch die Cloud bereitgestellt. Der Link kann bspw. durch den Feldgerätehersteller dem Feldgerätebetreiber zur Verfügung gestellt werden. Anschließend kann im Verfahrensschritt e) der digitale Zwilling 1 mit Hilfe des Links auf eine Computereinheit 9, bspw. eine Computereinheit des Feldgerätebetreibers, heruntergeladen und auf dieser ausgeführt werden. Auf der Computereinheit 9 läuft somit nach Ausführen des digitalen Zwillings 1 eine digitale "Kopie" des Zweileiterfeldgerätes 2, welche über die IP-Adresse in die IT-Welt außerhalb der Automatisierungsanlage 15 eingebunden werden kann.

In einem nächsten Verfahrensschritt h) sieht das erfindungsgemäße Verfahren vor, dass der auf der Computereinheit 9 ausgeführten digitalen Zwilling 1 an die in der Cloud 5 gehostete Produktdatenbank 10 angebunden wird. In der Produktdatenbank 10 werden alle für das Zweileiterfeldgerät 2 relevanten Stammdaten sowie alle einen Lebenszyklus des Zweileiterfeldgerätes betreffende Produktdaten vorgehalten. Als Stammdaten, welche auch als Produktstammdaten bezeichnet werden, wird insbesondere eine Seriennummer des Zweileiterfeldgerätes 2 vorgehalten. Ferner werden in der Produktdatenbank 10 Produktdaten auch in Kombination mit der Verwaltungsschale vorgehalten, so dass vorzugsweise immer die neuste Verwaltungsschale für das Zweileiterfeldgerät in der Produktdatenbank 10 vorhanden ist. Neben der Seriennummer können auch weitere relevante Produktattribute als Stammdaten bzw. Produktstammdaten vorgehalten werden. Insbesondere können die weiteren relevanten Produktattribute gemäß eCl@ss ausgebildet sein. Als eCl@ss wird ein weltweiter, ISO/IEC-normkonformer Datenstandard für die Klassifizierung und eindeutige Beschreibung von Produkten und Dienstleistungen mit Hilfe von standardisierten ISO-konformen Merkmalen bezeichnet.

Nach dem Anbinden des digitalen Zwillings 1 an die Produktdatenbank 10 wird in einem nächsten Verfahrensschritt i) überprüft, ob die in der Produktdatenbank 10 vorgehaltenen Produktdaten eine Änderung gegenüber den Daten, die das digitale Abbild 1 zum Zeitpunkt des Zeitstempels 4 zugeführt wurden, erfahren haben. Die Überprüfung erfolgt hierbei vorzugsweise in regelmäßigen Abständen. Die Änderung kann eine Änderung der Verwaltungsschale 8, der Stammdaten oder der Lebenszyklusdaten betreffen. In dem Fall, dass eine Änderung der in der Produktdatenbank 10 vorgehaltenen Produktdaten im Vergleich zu den in dem digitalen Abbild gespeicherten Daten stattgefunden hat bzw. erfolgt, kann ferner vorgesehen sein, dass ein Triggersignal 11 von dem digitalen Zwilling 1 ausgegeben wird. Das Triggersignal 11 kann, wie in Fig. 1 dargestellt, vorzugsweise an ein Instandhaltungsplanungs- und -steuerungssystem (kurz: CMMS) 12 des Betreibers des Zweileiterfeldgerätes 2 ausgegeben werden, so dass der Feldgerätebetreiber über die Änderung informiert wird. Hierdurch wird der Feldgerätebetreiber in die Lage versetzt anfallenden Änderungen an dem Zweileiterfeldgerät 2 durchzuführen. Lebenszyklusdaten können beispielsweise ein "Orderstopp" Datum oder ein "Last Repair" Datum sein.

Je nach konkreter Ausprägung der Verbindungseinheit 3, also ob diese als stationäre oder mobile Einheit ausgebildet ist, wird nachdem eine Änderung festgestellt wurde, das Verfahren wiederholt. In dem Fall, dass die Verbindungseinheit 3 als eine stationäre Einheit ausgebildet ist, die dauerhaft mit dem Zweileiterfeldgerät 2 verbunden ist, werden die Verfahrensschritte c) bis i) erneut ausgeführt. In dem Fall, dass die Verbindungseinheit 3 als eine mobile Einheit ausgebildet ist, die nach dem herunterladen der Daten gemäß Verfahrensschritt b) von dem Zweileiterfeldgerät 2 getrennt wird, wird das vollständige Verfahren (Verfahrensschritte a) bis i)) erneut ausgeführt.

## Patentansprüche

1. Verfahren zum Bereitstellen eines digitalen Zwillings (1) für ein nicht digitales Feldgerät der Automatisierungstechnik (2), umfassend die folgenden Verfahrensschritte:
a) Verbinden einer Verbindungseinheit (3) mit dem nicht digitalen Feldgerät (2);
b) Herunterladen von in dem nicht digitalen Feldgerät (2) vorgehalten Daten zu der Verbindungseinheit (3);
c) Erzeugen eines Zeitstempels (4) für die heruntergeladenen Daten;
d) Übermitteln der heruntergeladenen Daten zusammen mit dem Zeitstempel an eine Cloud (5);
e) Instanziieren eines digitalen Abbilds (6) des nicht digitalen Feldgerätes (2) in der Cloud (5), wobei die übermittelten Daten und weitere für das nicht digitale Feldgerät (2) spezifische Daten, die in der Cloud (5) vorgehalten werden, dem digitalen Abbild (6) zugeführt werden, so dass das digitale Abbild (6) sämtliche für das nicht digitale Feldgerät (2) zu einem Zeitpunkt des Zeitstempels (4) bereitstehende Daten umfasst, wobei das digitale Abbild (6) ferner mit dem Zeitstempel (4) versehen wird;
f) Erzeugen und Bereitstellen eines authentifizierten Links (7) zum Herunterladen des digitalen Zwillings (1) für das nicht digitale Feldgerät (2) aus der Cloud (5), wobei der digitale Zwilling (1) zumindest eine Verwaltungsschale (8) und das digitale Abbild (6) mit dem Zeitstempel umfasst;
g) Herunterladen des digitalen Zwillings (1) mit Hilfe des Links (7) und Ausführen des digitalen Zwillings (1) auf einer Computereinheit (9), welche vorzugsweise von einem Betreiber des nicht digitalen Feldgeräts betrieben wird;
h) Anbinden des auf der Computereinheit (9) ausgeführten digitalen Zwillings (1) an eine in der Cloud (5) befindliche Produktdatenbank (10), welche Produktdatenbank (10) Produktdaten umfasst, die zumindest alle für das nicht digitale Feldgerät (2) relevanten Stammdaten, insbesondere auch eine Seriennummer, alle relevanten einen Lebenszyklus des nicht digitalen Feldgerätes betreffenden Daten und/oder die Verwaltungsschale (8) aufweist;
i) Überprüfen, vorzugsweise in regelmäßigen Abständen, ob die in der Produktdatenbank (10) vorgehaltenen Produktdaten eine Änderung gegenüber den Daten, die das digitale Abbild (1) zum Zeitpunkt des Zeitstempels (4) zugeführt wurden, erfahren haben.

2. Verfahren nach Anspruch 1, wobei ferner überprüft wird, ob eine Änderung der Verwaltungsschale (8) gegenüber der Verwaltungsschale (8) des digitalen Abbilds (1) gegeben hat.

3. Verfahren nach Anspruch 1 oder 2, wobei in dem Fall, dass eine Änderung der in der Produktdatenbank (10) vorgehaltenen Daten im Vergleich zu den in dem digitalen Abbild (6) vorgehaltenen Daten und/oder eine Änderung der Verwaltungsschale (8) gegeben hat, ein Triggersignal (11) von dem digitalen Zwilling (1) ausgegeben wird.

4. Verfahren nach dem vorhergehenden Anspruch, wobei das Triggersignal (11) von dem digitalen Zwilling (1) an ein Instandhaltungsplanungs- und - steuerungssystem (12) des Betreibers des nicht digitalen Feldgeräts (2) ausgegeben wird, so dass der Betreiber des nicht digitalen Feldgerätes (2) über die Änderung informiert wird.

5. Verfahren nach einem der vorhergehenden Ansprüche, wobei als Daten eine Seriennummer, einen oder mehrere Parameter und/oder einen oder mehrere Messwerte von dem nicht digitalen Feldgerät (2) heruntergeladen werden.

6. Verfahren nach einem der vorhergehenden Ansprüche, wobei die Verbindungseinheit (3) über eine drahtlose Verbindung (13) mit dem nicht digitalen Feldgerät verbunden wird.

7. Verfahren nach einem der Ansprüche 1 bis 5, wobei die Verbindungseinheit (3) mittels einer Verbindungsleitung (14) mit dem nicht digitalen Feldgerät (2) verbunden wird.

8. Verfahren nach einem der vorhergehenden Ansprüche, wobei die Verbindungseinheit (3) als eine stationäre Einheit ausgebildet ist, die dauerhaft mit dem nicht digitalen Feldgerät (2) verbunden ist und wobei in dem Fall, dass eine Änderung festgestellt wird, die Verfahrensschritte b) bis i) erneut ausgeführt werden.

9. Verfahren nach einem der vorhergehenden Ansprüche, wobei die Verbindungseinheit (3) als eine mobile Einheit ausgebildet ist, die nach dem herunterladen der Daten gemäß Verfahrensschritt b) von dem nicht digitalen Feldgerät (2) getrennt wird und wobei in dem Fall, dass eine Änderung festgestellt wird, die Verfahrensschritte a) bis i) erneut ausgeführt werden.

## Claims

1. Method to provide a digital twin (1) for a non-digital field device from the field of automation technology (2), comprising the following process steps:
a) Connection of a connection unit (3) to the non-digital field device (2);
b) Download of data stored in the non-digital field device (2) to the connection unit (3);
c) Generation of a timestamp (4) for the downloaded data;
d) Transmission of the downloaded data together with the timestamp to a cloud (5);
e) Instancing of a digital image (6) of the non-digital field device (2) in the cloud (5), wherein the transmitted data and other specific data for the non-digital field device (2) that is stored in the cloud (5) is added to the digital image (6), so that the digital image (6) encompasses all existing data for the non-digital field device (2) at a time of the timestamp (4), wherein the time stamp (4) is also applied to digital image (6);
f) Generation and provision of a authenticated link (7) for downloading the digital twin (1) for the non-digital field device (2) from the cloud (5), wherein the digital twin (1) encompasses at least one administration shell (8) and the digital image (6) with the timestamp;
g) Download of the digital twin (1) using the link (7), and execution of the digital twin (1) on a computer unit (9), which is preferably operated by an operator of the non-digital field device;
h) Connection of the digital twin (1) that is executed on the computer unit (9) to a product database (10) located in the cloud (5), wherein the product database (10) encompasses product data that exhibits at least all relevant master data for the non-digital field device (2), in particular also a serial number, all relevant data relating to a lifecycle of the non-digital field device and/or the administration shell (8);
i) A check, preferably at regular intervals, to determine whether the product data stored in the product database (10) has been changed over the data that was added to the digital image (1) at the time of the timestamp (4).

2. Method according to claim 1, wherein a further check is performed to determine whether the administration shell (8) has been changed over the administration shell (8) of the digital image (1).

3. Method according to claim 1 or 2, wherein in the case that a change has been made to the data stored in the product database (10) in comparison with the data stored in the digital image (6) and/or the administration shell (8) has been changed, a trigger signal (11) is issued by the digital twin (1).

4. Method according to the preceding claim, wherein the trigger signal (11) from the digital twin (1) is issued to a maintenance planning and control system (12) of the operator of the non-digital field device (2), so that the operator of the non-digital field device (2) is informed of the change.

5. Method according to one of the preceding claims, wherein a serial number, one or more parameters, and/or one or more measured values are downloaded from the non-digital field device (2) as data.

6. Method according to one of the preceding claims, wherein the connection unit (3) is connected to the non-digital field device via a wireless connection (13).

7. Method according to one of the claims 1 to 5, wherein the connection unit (3) is connected to the non-digital field device (2) via a connecting line (14).

8. Method according to one of the preceding claims, wherein the connection unit (3) is produced as a stationary unit that is permanently connected to the non-digital field device (2) and wherein in the case that a change is determined, the process steps b) to i) are repeated.

9. Method according to one of the preceding claims, wherein the connection unit (3) is produced as a mobile unit that is disconnected from the non-digital field device (2) after downloading the data in line with process step b) and wherein in the case that a change is determined, the process steps a) to i) are repeated.

## Revendications

1. Procédé destiné à la mise à disposition d'un jumeau numérique (1) pour un appareil de terrain non numérique de la technique d'automatisation (2), lequel procédé comprend les étapes suivantes :
a) Raccordement d'une unité de liaison (3) à l'appareil de terrain non numérique
b) Téléchargement de données conservées dans l'appareil de terrain non numérique (2) vers l'unité de liaison (3) ;
c) Génération d'un horodatage (4) pour les données téléchargées ;
d) Transmission des données téléchargées ainsi que l'horodatage à un cloud (5) ;
e) Instanciation d'une image numérique (6) de l'appareil de terrain non numérique (2) dans le cloud (5), les données transmises et d'autres données spécifiques à l'appareil de terrain non numérique (2), qui sont conservées dans le cloud (5), étant fournies à l'image numérique (6), de sorte que l'image numérique (6) comprend toutes les données disponibles pour l'appareil de terrain non numérique (2) à un moment de l'horodatage (4), l'image numérique (6) étant en outre munie de l'horodatage (4) ;
f) Génération et mise à disposition d'un lien authentifié (7) pour le téléchargement du jumeau numérique (1) pour l'appareil de terrain non numérique (2) à partir du cloud (5), le jumeau numérique (1) comprenant au moins une coquille de gestion (8) et l'image numérique (6) avec l'horodatage ;
g) Téléchargement du jumeau numérique (1) à l'aide du lien (7) et exécution du jumeau numérique (1) sur une unité d'ordinateur (9), laquelle est de préférence utilisée par un exploitant de l'appareil de terrain non numérique ;
h) Intégration du jumeau numérique (1) exécuté sur l'unité d'ordinateur (9) à une base de données de produits (10) se trouvant dans le cloud (5), laquelle base de données de produits (10) comprend des données de produits qui présentent au moins toutes les données de base pertinentes pour l'appareil de terrain non numérique (2), notamment également un numéro de série, toutes les données pertinentes concernant un cycle de vie de l'appareil de terrain non numérique et/ou la coquille de gestion (8) ;
i) Vérification, de préférence à intervalles réguliers, si les données de produits conservées dans la base de données de produits (10) ont subi une modification par rapport aux données qui ont été fournies à l'image numérique (1) au moment de l'horodatage (4).

2. Procédé selon la revendication 1, pour lequel on vérifie en outre s'il y a eu une modification de la coquille de gestion (8) par rapport à la coquille de gestion (8) de l'image numérique (1).

3. Procédé selon la revendication 1 ou 2, pour lequel, dans le cas où il y a eu une modification des données conservées dans la base de données de produits (10) par rapport aux données conservées dans l'image numérique (6) et/ou une modification de la coquille de gestion (8), un signal de déclenchement (11) est émis par le jumeau numérique (1).

4. Procédé selon la revendication précédente, pour lequel le signal de déclenchement (11) est émis par le jumeau numérique (1) vers un système de planification et de contrôle de maintenance (12) de l'exploitant de l'appareil de terrain non numérique (2), de sorte que l'exploitant de l'appareil de terrain non numérique (2) est informé de la modification.

5. Procédé selon l'une des revendications précédentes, pour lequel on télécharge comme données un numéro de série, un ou plusieurs paramètres et/ou une ou plusieurs valeurs mesurées à partir de l'appareil de terrain non numérique (2).

6. Procédé selon l'une des revendications précédentes, pour lequel l'unité de liaison (3) est reliée à l'appareil de terrain non numérique par une liaison sans fil (13).

7. Procédé selon l'une des revendications 1 à 5, pour lequel l'unité de liaison (3) est reliée à l'appareil de terrain non numérique (2) au moyen d'un câble de liaison (14).

8. Procédé selon l'une des revendications précédentes,
pour lequel l'unité de liaison (3) est réalisée sous la forme d'une unité fixe qui est reliée de manière permanente à l'appareil de terrain non numérique (2) et
pour lequel, dans le cas où une modification est constatée, les étapes de procédé b) à i) sont à nouveau exécutées.

9. Procédé selon l'une des revendications précédentes,
pour lequel l'unité de liaison (3) est réalisée sous la forme d'une unité mobile qui est séparée de l'appareil de terrain non numérique (2) après le téléchargement des données selon l'étape de procédé b) et
pour lequel, dans le cas où une modification est constatée, les étapes de procédé a) à i) sont à nouveau exécutées.
